# EUROPEAN PATENT SPECIFICATION

(11) **EP 2 482 480 B1**
(45) Date of publication and mention of the grant of the patent: **15.07.2015**
(21) Application number: 11305072.8
(22) Date of filing: 25.01.2011
(51) Int. Cl.: H04J 14/02

(54) **Optical network element for WDM**
Optisches Netzwerkelement für WDM
Élément de réseau optique pour WDM

(43) Date of publication of application: 01.08.2012
(73) Proprietor: ALCATEL LUCENT, 92100 Boulogne-Billancourt (FR)
(72) Inventor: Vandenweghe, Cédric, 91620 Nozay (FR); Zami, Thierry, 91620 Nozay (FR)
(74) Representative: Sciaux, Edmond

(56) References cited:
- EP-A1- 2 139 127
- EP-A2- 1 569 494
- US-B2- 7 161 964

## Description

### Field of the invention

The invention relates to the technical field of optical communication systems, in particular optical network elements for wavelength division multiplexing (WDM).

### Background

Mastery of optical fiber wavelength division multiplexing (WDM) transmission technology is a major factor in meeting the increasing needs of data transfer rates in the transmission of information. The term "transparent" is applied to a transmission system in which the signal remains optical without being converted into an electronic signal when passing through a network routing node. Transparency in optical communication networks is a characteristic that makes it possible to reduce the cost of network equipment by eliminating optical-electrical-optical conversions, and therefore the corresponding transducers. Wavelength switching nodes used in transparent WDM networks include devices known as reconfigurable optical add-drop multiplexers (ROADM) or optical crossconnects (OXC). Add and drop devices in WDM network elements refer to subsystems providing add and drop functions, i.e. a capability to make write-accesses and read-accesses to the WDM transport layer.

As network element operations become more and more automated, the issue of monitoring proper functionality of the network elements becomes more critical. Especially, there are numerous parts in a network element the failure of which should be quickly detectable to remedy or avoid interruptions of service.

EP1569494A2 discloses a add/drop node in a ring. The add/drop node comprises a transport element that passively adds and drops traffic to and from a ring. The transport element includes a passive optical splitter set with a drop coupler and a add coupler. The drop coupler passively splits the ingress signal into a passthrough signal and a drop signal. The add coupler passively combines the passthrough signal and an add signal. Drop optical receivers and add optical transmitters are used to transmit and receive certain traffic. The overall control of the add/drop node may be accomplished using a network management system.

EP2139127A1 discloses an optical loopback circuit on an add/drop transmission path between the wavelength separating unit and the add/drop station, for monitoring an optical fiber in a submarine cable. Station A and B are land optical transceiver stations that communicate via optical fibers for transmission path in the submarine cable. The station A can transmit a monitor signal as an optical signal used to monitor the transmission path from the station A to the station B. The optical loopback circuit loops back the dropped monitor signal to the transmission side station that transmitted the monitor signal. The transmission side station receives the looped-back signal.

US7161964B2 discloses a reconfigurable ADD/DROP multiplexer/demultiplexer apparatus that is implemented by connecting a multiplexer/demultiplexer apparatus to a serializer/deserializer (SERDES) apparatus having a loop-back capability. As used herein, the loopback capability relates to sending electrical signal from a photodetector of a drop module to the laser of an add module.

### Summary

In an embodiment, the invention provides an optical network element comprises:
an optical input for receiving a plurality of optical signals on a plurality of wavelength channels,
an optical output for transmitting a plurality of optical signals on the plurality of wavelength channels,
a distributing component, for example a non-selective component such as a power splitter or a selective component such as a WSS, arranged to pass optical signals from the optical input to an optical transit path and to an optical drop path,
a merging component for example a non-selective component such as a power combiner or a selective component such as a WSS, arranged to pass optical signals from the optical transit path and from an optical add path to the optical output, a drop module comprising a plurality of optical receivers for demodulating optical signals,
an add module comprising a wavelength multiplexing arrangement connected to the optical add path and a plurality of optical transmitters connected to the wavelength multiplexing arrangement for generating optical signals on the wavelength channels, and
an optical loop back path connecting the add module to the drop module for passing optical signals generated by the transmitters of the add module to the receivers of the drop module for the purpose of testing.

According to embodiments, such optical network elements can comprise one or more of the features below.

Such an optical loop back path may be connected to diverse points of the add module. Especially, the optical loop back path may be connected upstream or downstream of the wavelength multiplexing arrangement of the add module.

In an embodiment, an optical switch is arranged to selectively direct the optical signal generated by one of the transmitters to the optical add path or the optical loop back path.

In an embodiment, the optical loop back path is connected to the add module downstream of the wavelength multiplexing arrangement. Such an arrangement makes it possible to have optical signals pass through the wavelength multiplexing arrangement to reach the loop back path, so that these optical signals can be used simultaneously for testing functionality of the wavelength multiplexing arrangement and testing functionality of the optical receivers.

In an embodiment, the add module comprises an optical power splitter having respective outputs connected to the optical add path and the optical loop back path and an input connected to the wavelength multiplexing arrangement.

In another embodiment, the add module comprises a programmable demultiplexer having respective outputs connected to the optical add path and the optical loop back path and an input connected to the wavelength multiplexing arrangement.

In an embodiment, the optical network element further comprises a second optical output, a second merging component arranged to pass optical signals from a second optical transit path and from a second optical add path to the second optical output, wherein the second optical add path is connected to a further output of the optical power splitter or programmable demultiplexer of the add module. Such an arrangement makes it possible to transmit optical signals to several output lines or output directions of the network element from a same optical transmitter, a property also known as multidirectional add functionality.

In an embodiment, the optical loop back path further comprises a wavelength selective filter to selectively pass or block the optical signals to the drop module as a function of the wavelength channels of said optical signals.

In an embodiment, the wavelength selective filter comprises an integrated wavelength blocker.

Such an optical loop back path may be connected to diverse points of the drop module. Especially, the optical loop back path may be connected upstream or downstream of a wavelength demultiplexing arrangement of the drop module.

In an embodiment, the drop module comprises a wavelength demultiplexing arrangement connected to the optical drop path and the optical receivers connected to the wavelength demultiplexing arrangement and the optical loop back path is connected to the drop module upstream of the wavelength demultiplexing arrangement to have the optical signals coming from the optical loop back path separated by the wavelength demultiplexing arrangement. Such an arrangement makes it possible to have the optical signals coming from the loop back path pass through the wavelength demultiplexing arrangement, so that the optical signals can be used simultaneously for testing functionality of the wavelength demultiplexing arrangement and testing functionality of the optical receivers.

In an embodiment, the optical network element further comprises an optical coupler connected to an input of the wavelength demultiplexing arrangement and arranged to merge the optical signals from the optical loop back path with the optical signals from the optical drop path.

In an embodiment, the drop module comprises a programmable multiplexer having respective inputs connected to the optical drop path and the optical loop back path and an output connected to the wavelength demultiplexing arrangement, the programmable multiplexer being adapted to pass to the wavelength demultiplexing arrangement a plurality of optical signals from the respective inputs on a selected plurality of wavelength channels.

In an embodiment, the optical network element further comprises a second optical input, a second distributing component arranged to pass optical signals from the second optical input to a second optical transit path and a second optical drop path, wherein the second optical drop path is connected to a further input of the programmable multiplexer. Such an arrangement makes it possible to use a same receiver for receiving optical signals from several input lines or input directions of the network element, a property also known as multidirectional drop functionality.

In an embodiment, the optical loop back path comprises an optical waveguide extending between the corresponding output of the optical power splitter and the corresponding input of the programmable multiplexer.

Conversely, in another embodiment, the optical loop back path comprises an optical waveguide extending between an output of the programmable demultiplexer of the add module and a corresponding input of the optical power coupler of the drop module. In yet another embodiment, the optical loop back path comprises an optical waveguide extending between two WSSs.

In an embodiment, the optical network element further comprises a plurality of identical or similar add modules, a plurality of identical or similar drop modules and a plurality of identical or similar optical loop back paths each connecting one of the add modules to one of the drop modules.

In an embodiment, the invention provides also a use of the network element, comprising:
selecting an available wavelength channel for testing an optical receiver of the drop module and an optical transmitter of the add module,
generating an optical signal on the selected wavelength channel with the optical transmitter of the add module,
passing the optical signal on the selected wavelength channel through the optical loop back path to the drop module,
testing the correct operations of the optical receiver and the optical transmitter with the optical signal on the selected wavelength channel, e.g. by monitoring the power of the optical signal.

According to embodiments, such use of the optical network element can comprise one or more of the features below.

In an embodiment, testing the correct operations of the optical receiver comprises demodulating the optical signal with the optical receiver.

In an embodiment, selecting an available wavelength channel comprises avoiding spectral collisions between the optical signal passed through the optical loop back path and optical signals passed through the drop path.

Aspects of the invention stem for the observation that it may be difficult to monitor the functionality of some components in add and drop modules of a network element at times when those components are not used. Such a situation may occur after a connection has failed and has subsequently been restored using different resources from the original connection, e.g. transponders, multiplexers, demultiplexers, switches, optical fibers, etc. Some of the resources allocated to the original connection are then released, namely they are no more sending or receiving optical signals.

Aspects of the invention are based on the idea of generating optical signals with transmitters of an add module for the purpose of testing unused components in the add module and/or in the drop module of the network element. Aspects of the invention are based on the idea of testing components of a drop module and/or an add module without having to transmit permanent probing signals between neighboring nodes. Aspects of the invention are based on the idea of having continuous alarm surveillance on the components of a drop module and/or an add module even if the components are not currently involved in a network service.

### Brief description of the drawings

These and other aspects of the invention will be apparent from and elucidated with reference to the embodiments described hereinafter, by way of example, with reference to the drawings.
Figure 1 is a functional representation of an ROADM in accordance with a first embodiment.
Figure 2 is a functional representation of an ROADM in accordance with a second embodiment.
Figure 3 is a functional representation of adegree-3 optical switching node in accordance with an embodiment.

### Detailed description of embodiments

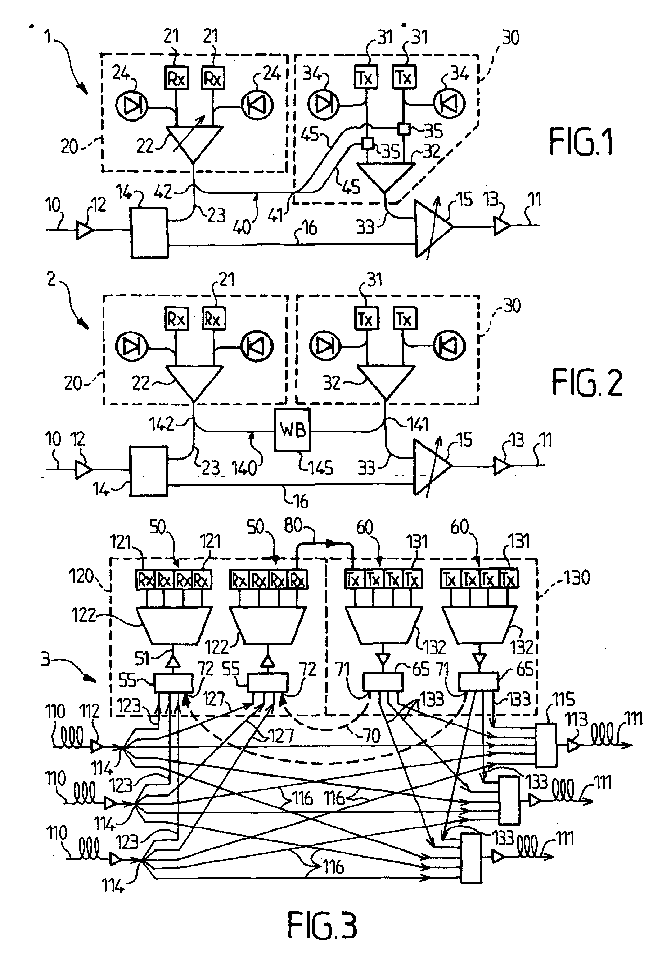

With reference to Figure 1, an optical transparent switching node 1 equipped with a drop module 20 and an add module 30 will now be described.

The optical node 1 is a ROADM having one input line 10 and one output line 11 to be connected with two respective neighboring nodes in a transparent network. The optical node 1 can be used in a transparent network or transparent network island with any topology, e.g. mesh, ring, star, tree and others. The same type of architecture could be used for making an optical node with a different, higher degree of connectivity.

As shown, the WDM input line 10 may comprise an optical amplifier 12 and the WDM output line 11 may comprise an optical amplifier 13 to compensate for the losses of the node components.

The input line 10 is connected to send the WDM traffic to a distributing component 14 that may be a power splitter or a Wavelength Selective Switch (WSS). The output line 11 is connected to receive WDM traffic from a merging component 15 that may be an optical power coupler or a Wavelength Selective Switch (WSS). If the distributing component 14 is a WSS, the merging component 15 can consist of an optical power coupler. Between the components 14 and 15, a transit line 16 is connected to pass transit traffic from the input line 10 to the output line 11.

In a preferred embodiment, the distributing component 14 is a power splitter and the merging component 15 is a WSS, an architecture known as broadcast-and-select.

The drop module 20 of the node will now be described. The drop module 20 comprises a plurality of receivers 21, two of which are shown for the sake of simplicity, and a channel demultiplexer 22 with a WDM input connected to a WDM drop line 23 to receive optical signals from the distributing component 14 and a plurality of outputs connected to the optical receivers 21. The channel demultiplexer 22 can be made of a fixed wavelength demultiplexer, a WSS, the combination of a fixed wavelength demultiplexer with an optical spatial switching matrix, an optical splitter having a wavelength-tunable optical filter on each of its output ports or other arrangements, e.g. several stages. The channel demultiplexer 22 serves to separate optical signals to be dropped as a function of wavelength, so that each optical signal can be received by a respective receiver 21.

A wavelength selective switch (WSS) refers to a piece of equipment that may be used as a reconfigurable multiplexer or a reconfigurable demultiplexer. When it is operated as a demultiplexer, a plurality of selectable ports serve as outputs, and a shared port serves as a common input. The wavelength selective switch is capable of switching each wavelength channel received at the input to a selected output of that piece of equipment, based on a control signal sent by a control unit not shown. This piece of equipment thereby carries out a reconfigurable demultiplexing function on wavelength channels whose optical frequencies are aligned with one or more predetermined frequency grids. It makes it possible to pass, to each output, one channel, multiple channels, or no channel, selected from among the channels received at the shared input.

The optical receivers may be quadratic receivers or coherent receivers. For quadratic receivers, the channel demultiplexer 22 separates the incoming traffic into individual wavelength channels, so that each receiver receives a single wavelength channel, i.e. a colored optical signal.

With a coherent receiver, it is possible to select a wavelength channel to be demodulated among a plurality of superimposed wavelength channels by finely tuning a monochromatic local oscillator. Therefore, in the case where coherent receivers are used, the channel demultiplexer 22 may separate the incoming traffic into groups of wavelength channels, so that each coherent receiver receives a plurality of superimposed wavelength channels, i.e. a WDM optical signal. Alternatively, where the number of channels is not too high, the channel demultiplexer 22 may be suppressed.

Fig. 1 also shows photodiodes 24 arranged to sample a small fraction of the light received by each receiver 21. The photodiodes 24 serve to control the presence or absence of light at each receiver 21 to help monitor the proper operations of the receivers. Similar photodiodes can be provided at different locations in the drop module 20 to monitor the operation of each component and locate a point of failure more precisely where a loss of light occurs.

The add module 30 of the node will now be described. The add module 30 comprises a plurality of optical transmitters 31, two of which are shown for the sake of simplicity, and a channel multiplexer 32 with a WDM output connected to a WDM add line 33 to send optical signals to the merging component 15 and a plurality of inputs connected to the optical transmitters 31. The channel multiplexer 32 can be made of a fixed wavelength multiplexer, a WSS, the combination of a fixed wavelength demultiplexer with an optical spatial switching matrix, an optical power combiner or other arrangements, e.g. several stages. The channel multiplexer 32 serves to superpose optical signals generated by the optical transmitters 31, so that the added traffic can be sent on a single input (or small number of inputs) of the merging component 15.

Photodiodes 34 are arranged to sample a small fraction of the light sent by each transmitter 31 to control the presence or absence of light at each transmitter 31. Similar photodiodes can be provided at different locations in the add module 30 to monitor the operation of each component.

In the embodiment of Fig. 1, a loop-back optical link 40 that connects the add module 30 to the drop module 20 comprises the following components:
- 1x2 optical switches 35 arranged between each transmitter 31 and the multiplexer 32. Each optical switch 35 can be selectively configured to pass the optical signal generated by the corresponding transmitter 31 either to the multiplexer 32 or to the optical fibers 45.
- Optical fibers 45 connected to each optical switch 35 to the pass optical signals from transmitter 31 to the drop module,
- Optical power couplers 41 and 42 to merge the optical signals coming from the optical switches 35 with the drop traffic coming from the drop link 23, upstream of the demultiplexer 22.

The loop-back optical link 40 makes it possible to test the operating state of a receiver 21 that is not currently operated to drop an optical signal from the WDM network and a transmitter 31 that is not currently operated to add an optical signal to the WDM network. For that purpose, the following steps may be followed:
- Selecting at least one pair of a receiver 21 and a transmitter 31 to be tested. In practice, provided that optical connections are all bidirectional in the optical network under consideration, an available receiver 21 is always paired with an available transmitter 31.
- Selecting a wavelength channel that is available for testing the receiver, i.e. a wavelength channel that is not present on drop link 23,
- Configuring the corresponding switch 35 to forward the testing optical signal through the optical loop back link 40 to the drop module 20.
- Configuring the demultiplexer 22 if the demultiplexer is reconfigurable, to have the testing optical signal forwarded to the selected receiver 21.
- Detecting the presence of light at the selected receiver 21 using the photodiode 24, and at all intermediate monitoring points where photodiodes are located in the optical path between the transmitter 31 and the receiver 21.
- Evaluating the operating state of the receiver 21, namely whether the testing optical signal is correctly demodulated, and detecting whether the expected level of power is present at all monitoring points.
- Updating the status of alarms on the selected transmitters, receivers and on any intermediate element involved in the optical add and drop path, by means of a node controller or network controller as a function of the evaluation and detections.

With this method, a plurality of transmitters and receivers can be tested simultaneously in parallel using different wavelength channels.

With reference to Figure 2, an optical transparent switching node 2 in accordance with another embodiment will now be described. Elements identical or similar to those of optical transparent switching node 1 are designated by the same numeral.

In Fig. 2, the optical loop back link 140 connects the output of the add module 30 to the input of the drop module 20, through an optical power splitter 141 arranged on the add link 33 and an optical power coupler 142 arranged on the drop link 23. In order to select the optical signals to be forwarded to the drop module 20 through the loop back link 140 for the purpose of testing, a wavelength blocker 145 is arranged on the loop back link 140. Suitable wavelength blockers are available e.g. from manufacturer Nistica Inc, Oclaro or Neophotonics.

The embodiment of Fig. 2 can be used similarly to that of Fig. 1 for the purpose of testing receivers 21. However, it provides additional advantages since testing optical signals that are passed through the loop back link 140 must also proceed through the add module 30 all the way from the transmitter 31 to the add link 33, just as an ordinary added signal, and through the drop module 20 all the way from the drop link 23 to the receiver 21, just as an ordinary dropped signal.. Therefore the presence of the testing signal can be detected at different points in the add module 30 and/or drop module 20 to monitor the operations of different components of those modules, such as multiplexers, demultiplexers, WSSs, filters, and others, namely all components involved in the insertion or extraction of optical signals in the node. Therefore the testing signals can serve to maintain accurate alarm surveillance on those components even at times when they are not involved in network services.

With reference to Figure 3, an optical transparent switching node equipped with a multidirectional drop device 120 and a multidirectional add device 130 will now be described. Elements identical or similar to those of optical transparent switching node 1 are designated by the same numeral increased by 100.

The optical node 3 as shown has a degree-3 connectivity, namely it has three WDM input lines 110 and three WDM output lines 111 and can be connected bidirectionally with three respective neighboring nodes in a transparent network. The optical node 3 can be used in a transparent network or transparent network island with any topology, e.g. mesh, ring, star, tree and others. The same type of architecture could be used for making an optical node with a different, higher or lower degree of connectivity.

As shown, each WDM input line 110 may comprise an optical amplifier 112 and each WDM output line 111 may comprise an optical amplifier 113 to compensate for the losses of the node components.

Each input line 110 is connected to send the WDM traffic to a respective distributing component 114 that may be a power splitter or a WSS. Each output line 111 is connected to receive WDM traffic from a merging component 115 that may be a power coupler or a WSS. Between the components 114 and 115, a plurality of transit lines 116 are connected to pass transit traffic from any of the input lines 110 to any of the output lines 111, although it is ordinarily not necessary to provide a transit line between a pair of input and output lines that connect to a same neighboring node.

In a preferred embodiment, the components 114 are power splitters and the components 115 are WSSs, an architecture known as broadcast and select.

The multidirectional drop device 120 of the node will now be described. The multidirectional drop device 120 comprises two identical receiver blocks 50. Each receiver block 50 comprises a programmable demultiplexer 122 with a WDM input connected to a WDM drop line 51 to receive optical signals to be dropped and a plurality of outputs connected to optical receivers 121. The programmable demultiplexer 122 can be made of the combination of a fixed wavelength demultiplexer with an OSSM, a WSS or an optical splitter having a wavelength-tunable optical filter on each of its output ports.

For each receiver block 50, a WSS 55 is connected to a plurality of drop lines 123 from each of the distributing components 114 corresponding to the respective input lines 110, to receive signals to be dropped from all input lines 110. The WSS 55 passes some or all of those signals to the drop line 51. Hence, each receiver block 50 can receive optical signals to be dropped from each input line 110 to provide multidirectional operations.

In an embodiment, the components 114 are power splitters and the WSSs 55 are programmed to avoid spectral collisions among signals. The drop device 120 receives signals to be dropped from each of the splitters 114 by two respective WDM drop lines 123 and 127. The WDM lines 123 and 127 pass actually all the incoming traffic to the drop device. Each drop line 123 and 127 is connected to a port of the respective WSS 55 used as a programmable multiplexer. The WSSs 55 are configured to block signals that are not to be dropped, as a function of their wavelengths, and to pass signals to be dropped to at least one of the two receiver blocks 50, as a function of their wavelengths.

The optical switching node 3 is also equipped with a multidirectional add device 130 that will now be described. The structure and operations of the add device 130 are symmetrical to those of the drop device 120. A transmitter block 60 is constructed as a receiver block 50 in which receivers 121 are replaced by optical transmitters 131. All components like optical lines, amplifiers, OSSMs, and wavelength demultiplexers operate to pass optical signals in the reverse direction compared to the drop device 120.

For each transmitter block 60, a power splitter 65 is connected to a plurality of add lines 133 towards each of the WSSs 115 corresponding to the respective output lines 111, to pass signals to be added to all output lines 111. The power splitter 65 receives all those signals from the multiplexer 132. The WSSs 115 operate both to merge signals to be added from the plural multidirectional transmitter blocks 60 and to merge signals to be added with transit signals. If the components 115 are optical couplers instead of WSSs, the components 65 should consist of WSSs acting as wavelength demultiplexers instead of power splitters. The add device 130 is adapted to provide multidirectional operations in the same way as the corresponding drop device 120.

The loop back links 70 between add device 130 and drop device 120 appear as dash lines in Fig. 3. In Fig. 2, the loop back link 140 extends between an optical splitter and an optical coupler, so that an additional wavelength blocker 145 or the like is required to filter out some wavelength channels originating from the add module 30 in order to avoid penalizing optical crosstalk with signals already present in the drop module 20 at the same wavelength. By contrast, in Fig. 3, a loop back link 70 is directly connected between an output port 71 of power splitter 65 and an input port of WSS 55. WSS 55 is a component of the drop device 120 that can block selectively any wavelength channel in order to avoid spectral collisions. Therefore, there is no need for a wavelength blocker on the loop back links 70 in Fig. 3.

However in a modified embodiment where WSS 55 is replaced with a power coupler, a wavelength blocker could be provided in the same manner as in Fig. 2.

In a further modified embodiment, the power splitters 65 of the add device 130 are replaced with WSSs arranged a programmable demultiplexers. Again, there is no need for a wavelength blocker on the loop back links 70 in that case because the selection of wavelength channels can be done by the WSS 65 at the input of the loop back link 70 and/or the component 55 at the output of the loop back link 70 if it is also a WSS.

The loop back links 70 in the embodiment of Fig. 3 make it possible to set up internal optical connections to monitor the operations of the transmitters 131 of multidirectional add device 130, the receivers 121 of multidirectional drop device 120 and all components involved in the insertion or extraction of optical signals in the node.

In all the above embodiments, a receiver 21 or 121 may be provided as a 3R regenerator for WDM optical signals, e.g. by being coupled with a transmitter 31 or 131 through an electronic layer or a black and white layer, as outlined at numeral 80. It will be appreciated that the loop back links disclosed above can be particularly useful for testing such regeneration resources.

A situation can exist in which a 3R regeneration resource (e.g. a connected pair of a receiver 21 or 121 and a transmitter 31 or 131) becomes affected by a failure and the restoration happens, so that the optical signal is rerouted through another regeneration resource. After the restoration, the initial 3R regeneration resource cannot be monitored since it is not sending or receiving a signal anymore. The loop back link makes it possible to keep the original transmitter sending a test signal on an unused wavelength channel and to keep the original receiver receiving the test signal, so that the operating status of the transmitter and receiver can be continuously monitored and an alarm can be maintained as long as the failed component has not been repaired or replaced. Using the loop back link, the alarm stays raised and the operator may trigger a maintenance activity on the 3R resource.

In the embodiments shown, when a test signal reaches the drop module, it can be handled exactly as the other dropped signals coming from the WDM input of the node. Hence, if one photodiode is not detecting the expected level of power, it means that the physical connection with the upstream board does not work properly and an alarm can be raised.

Hence, sending test signals from add modules to drop modules through the disclosed loop back links facilitates maintenance operations in transparent optical network elements, namely facilitates obtaining accurate and up to date information about failures. In addition, this can be accomplished with resources internal to the network element, i.e. without reserving a wavelength channel for testing on an input line 10 or 110 or an output line 11 or 111 of the network element.

Elements such as the controllers could be e.g. hardware means like e.g. an ASIC, or a combination of hardware and software means, e.g. an ASIC and an FPGA, or at least one microprocessor and at least one memory with software modules located therein.

The invention is not limited to the described embodiments. The appended claims are to be construed as embodying all modification and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

## Claims

1. An optical network element (1, 2, 3) comprises:
an optical input (10, 110) for receiving a plurality of optical signals on a plurality of wavelength channels,
an optical output (11, 111) for transmitting a plurality of optical signals on the plurality of wavelength channels,
a distributing component (14, 114) arranged to pass optical signals from the optical input to an optical transit path (16, 116) and to an optical drop path (23, 123),
a merging component (15, 115) arranged to pass optical signals from the optical transit path and from an optical add path (33, 133) to the optical output,
a drop module (20, 120) comprising a plurality of optical receivers (21, 121) for demodulating optical signals,
an add module (30, 130) comprising a wavelength multiplexing arrangement ( 32, 132) connected to the optical add path (33, 133) and a plurality of optical transmitters (31, 131) connected to the wavelength multiplexing arrangement for generating optical signals on the wavelength channels,
**characterized in that** the optical network element comprises an internal optical loop back path (40, 140, 70) connecting the add module to the drop module for passing optical signals generated by the transmitters of the add module to the receivers of the drop module for the purpose of testing.

2. An optical network element in accordance with claim 1, further comprising an optical switch (35) arranged to selectively direct the optical signal generated by one of the transmitters to the optical add path (33) or the optical loop back path (40).

3. An optical network element in accordance with claim 1, wherein the optical loop back path (140, 70) is connected to the add module downstream of the wavelength multiplexing arrangement (32, 132).

4. An optical network element in accordance with claim 3, wherein the add module comprises an optical power splitter (141, 65) having respective outputs connected to the optical add path (33, 133) and the optical loop back path (140, 70) and an input connected to the wavelength multiplexing arrangement( 32, 132).

5. An optical network element in accordance with claim 3, wherein the add module comprises a programmable demultiplexer (65) having respective outputs connected to the optical add path (33, 133) and the optical loop back path (140, 70) and an input connected to the wavelength multiplexing arrangement( 32, 132).

6. An optical network element in accordance with claim 3 or 4, further comprising a second optical output (111), a second merging component (115) arranged to pass optical signals from a second optical transit path (116) and from a second optical add path (133) to the second optical output, wherein the second optical add path is connected to a further output of the optical power splitter or programmable demultiplexer (65) of the add module (130).

7. An optical network element in accordance with one of claims 1 to 6, wherein the optical loop back path (140, 70) further comprises a wavelength selective filter (145, 55) to selectively pass or block the optical signals to the drop module as a function of the wavelength channels of said optical signals, wherein the wavelength selective filter comprises an integrated wavelength blocker (145).

8. An optical network element in accordance with one of claims 1 to 7, wherein the drop module comprises a wavelength demultiplexing arrangement (22, 122) connected to the optical drop path (23, 123) and the optical receivers connected to the wavelength demultiplexing arrangement, wherein the optical loop back path (40, 140, 70) is connected to the drop module upstream of the wavelength demultiplexing arrangement (22, 122) to have the optical signals coming from the optical loop back path separated by the wavelength demultiplexing arrangement.

9. An optical network element in accordance with claim 8, further comprising an optical coupler (42, 142) connected to an input of the wavelength demultiplexing arrangement (22) and arranged to merge the optical signals from the optical loop back path (40, 140) with the optical signals from the optical drop path (23).

10. An optical network element in accordance with claim 8, wherein the drop module (120) comprises a programmable multiplexer (55) having respective inputs connected to the optical drop path (123) and the optical loop back path (70) and an output connected to the wavelength demultiplexing arrangement (122), the programmable multiplexer (55) being adapted to pass to the wavelength demultiplexing arrangement a plurality of optical signals from the respective inputs on a selected plurality of wavelength channels.

11. An optical network element in accordance with claim 10, further comprising a second optical input (110), a second distributing component (114) arranged to pass optical signals from the second optical input to a second optical transit path (116) and a second optical drop path (123), wherein the second optical drop path is connected to a further input of the programmable multiplexer (55).

12. An optical network element in accordance with claim 10 or 11 taken in combination with claim 4 or 5, wherein the optical loop back path comprises an optical waveguide (70) extending between the corresponding output (71) of the optical power splitter (65) and the corresponding input (72) of the programmable multiplexer (55).

13. Use of the network element in accordance with one of claims 1 to 12, comprising:
selecting an available wavelength channel for testing an optical receiver (21, 121) of the drop module and/or an optical transmitter (31, 131) of the add module,
generating an optical signal on the selected wavelength channel with the optical transmitter (31, 131) of the add module,
passing the optical signal on the selected wavelength channel through the optical loop back path (40, 140, 70) to the drop module,
testing the correct operations of the optical transmitter and/or the optical receiver with the optical signal on the selected wavelength channel.

14. Use in accordance with claim 13, wherein testing the correct operations of the optical receiver comprises demodulating the optical signal with the optical receiver.

15. Use in accordance with claim 13 or 14, wherein selecting an available wavelength channel comprises avoiding spectral collisions between the optical signal passed through the optical loop back path and optical signals passed through the drop path.

## Patentansprüche

1. Ein Element optischer Netzwerke (1, 2, 3) umfasst:
einen optischen Eingang (10, 110) für den Empfang einer Vielzahl optischer Signale auf einer Vielzahl von Wellenlängenkanälen,
einen optischen Ausgang (11, 111) für die Übertragung einer Vielzahl optischer Signale auf einer Vielzahl von Wellenlängenkanälen,
eine Verteilerkomponente (14, 114), ausgelegt für das Weiterleiten optischer Signale vom optischen Eingang zu einem optischen Übergangspfad (16, 116) und zu einem optischen DROP-Pfad (23, 123),
eine Zusammenführungskomponente (15, 115), ausgelegt für das Weiterleiten optischer Signale vom optischen Übergangspfad und vom optischen ADD-Pfad (33, 133) zum optischen Ausgang,
ein DROP-Modul (20, 120), das eine Vielzahl optischer Empfänger (21, 121) zum Demodulieren optischer Signale umfasst,
ein ADD-Modul (30, 130), das eine Anordnung für das Wellenlängen-Multiplexen (32, 132) umfasst, angeschlossen an den optischen ADD-Pfad (33, 133) und eine Vielzahl optischer Sender (31, 131), angeschlossen an die Anordnung für das Wellenlängen-Multiplexen zur Erzeugung optischer Signale auf den Wellenlängenkanälen,
**dadurch gekennzeichnet, dass** das Element optischer Netzwerke einen internen optischen Loopback-Pfad (40, 140, 70) umfasst, der das ADD-Modul mit dem DROP-Modul verbindet, zur Weitergabe zu Testzwecken von durch die Sender des ADD-Moduls erzeugten, optischen Signalen an die Empfänger des DROP-Moduls.

2. Ein Element optischer Netzwerke nach Anspruch 1, weiterhin einen optischen Schalter (35) umfassend, der ausgelegt ist für die selektive Weiterleitung der von einem der Sender erzeugten, optischen Signale zum optischen ADD-Pfad (33) oder zum optischen Loopback-Pfad (40).

3. Ein Element optischer Netzwerke nach Anspruch 1, wobei der optische Loopback-Pfad (140, 70) mit dem ADD-Modul verbunden ist, das der Anordnung für das Wellenlängen-Multiplexen (32, 132) nachgelagert ist.

4. Ein Element optischer Netzwerke nach Anspruch 3, wobei das ADD-Modul einen optischen Leistungssplitter (141, 65), von dem zugehörige Ausgänge an den optischen ADD-Pfad (33, 133) und den optischen Loopback-Pfad (140, 70) angeschlossen sind und einen Eingang, der an die Wellenlängen-Multiplex-Anordnung (32, 132) angeschlossen ist umfasst.

5. Ein Element optischer Netzwerke nach Anspruch 3, wobei das ADD-Modul einen programmierbaren Demultiplexer (65), mit zugehörigen Ausgängen, angeschlossen an den optischen ADD-Pfad (33, 133) und den optischen Loopback-Pfad (140, 70), und einen an die Wellenlängen-Multiplex-Anordnung (32, 132) angeschlossenen Eingang umfasst.

6. Ein Element optischer Netzwerke nach Anspruch 3 oder 4, weiterhin umfassend einen zweiten optischen Ausgang (111), eine zweite Zusammenführungskomponente (115), ausgelegt zur Weiterleitung optischer Signale von einem zweiten optischen Übergangspfad (116) und von einem zweiten optischen ADD-Pfad (133) zum zweiten optischen Ausgang, wobei der zweite optische ADD-Pfad an einen weiteren Ausgang des optischen Leistungssplitters oder des programmierbaren Demultiplexers (65) des ADD-Moduls (130) angeschlossen ist.

7. Ein Element optischer Netzwerke nach einem beliebigen der Ansprüche 1 bis 6, wobei der optische Loopback-Pfad (140, 70) weiterhin einen Wellenlängenselektionsfilter (145, 55) umfasst, um selektiv die optischen Signale zum DROP-Modul weiterzuleiten oder sie zu blockieren, als Funktion der Wellenlängenkanäle besagter optischer Signale, wobei der Wellenlängenselektionsfilter einen integrierten Wellenlängen-Blockierer (145) umfasst.

8. Ein Element optischer Netzwerke nach einem beliebigen der Ansprüche 1 bis 7, wobei das DROP-Modul eine Wellenlängen-Demultiplex-Anordnung (22, 122), angeschlossen an den optischen DROP-Pfad (23, 123), und die an die Wellenlängen-Demultiplex-Anordnung angeschlossenen optischen Empfänger umfasst, wobei der optische Loopback-Pfad (40, 140, 70) an das der Wellenlängen-Demultiplex-Anordnung (22,122) vorgelagerte DROP-Modul angeschlossen ist, damit die vom optischen Loopback-Pfad kommenden Signale durch die Wellenlängen-Demultiplex-Anordnung getrennt werden.

9. Ein Element optischer Netzwerke nach Anspruch 8, das weiterhin einen optischen Koppler (42, 142) umfasst, angeschlossen an einen Eingang der Wellenlängen-Demultiplex-Anordnung (22) und ausgelegt für das Zusammenfassen optischer Signale aus dem optischen Loopback-Pfad (40, 140) mit den optischen Signalen aus dem optischen DROP-Pfad (23).

10. Ein Element optischer Netzwerke nach Anspruch 8, wobei das DROP-Modul (120) einen programmierbaren Multiplexer (55) umfasst, wobei die zugehörigen Eingänge an den optischen DROP-Pfad (123) und den optischen Loopback-Pfad (70) sowie ein Ausgang an die Wellenlängen-Demultiplex-Anordnung (122) angeschlossen sind, wobei der programmierbare Multiplexer (55) ausgelegt ist für die Weiterleitung einer Vielzahl optischer Signale von den zugehörigen Eingängen über eine ausgewählte Vielzahl von Wellenlängenkanälen an die Wellenlängen-Demultiplex-Anordnung.

11. Ein Element optischer Netzwerke nach Anspruch 10, weiterhin umfassend einen zweiten optischen Eingang (110), eine zweite Verteilerkomponente (114), ausgelegt zur Weiterleitung optischer Signale vom zweiten optischen Eingang zu einem zweiten optischen Übergangspfad (116) und einem zweiten optischen DROP-Pfad (123), wobei der zweite optische DROP-Pfad an einen weiteren Eingang des programmierbaren Multiplexers (55) angeschlossen ist.

12. Ein Element optischer Netzwerke nach Anspruch 10 oder 11 in Kombination mit Anspruch 4 oder 5, wobei der optische Loopback-Pfad einen optischen Wellenleiter (70) umfasst, der sich erstreckt zwischen dem zugehörigen Ausgang (71) des optischen Leistungssplitters (65) und dem zugehörigen Eingang (72) des programmierbaren Multiplexers (55).

13. Verwendung des Netzwerkelements nach einem beliebigen der Ansprüche 1 bis 12, umfassend:
Auswahl eines verfügbaren Wellenlängenkanals zum Testen eines optischen Empfängers (21, 121) des DROP-Moduls und/oder eines optischen Senders (31, 131) des ADD-Moduls,
Generieren, mit dem optischen Sender (31, 131) des ADD-Moduls, eines optischen Signals auf dem gewählten Wellenlängenkanal generierend,
Weitergabe des optischen Signals auf dem gewählten Wellenlängenkanal durch den optischen Loopback-Pfad (40, 140) zum DROP-Modul,
Testen der korrekten Vorgänge des optischen Senders und/oder des optischen Empfängers mit dem optischen Signal auf dem gewählten Wellenlängenkanal.

14. Verwendung nach Anspruch 13, wobei das Testen der korrekten Vorgänge des optischen Empfängers das Demodulieren des optischen Signals mit dem optischen Empfänger umfasst.

15. Verwendung nach Anspruch 13 oder 14, wobei die Auswahl eines verfügbaren Wellenlängenkanals die Vermeidung spektraler Kollisionen zwischen denjenigen optischen Signalen umfasst, die den optischen Loopback-Pfad durchlaufen, und denjenigen optischen Signalen, die den DROP-Pfad durchlaufen.

## Revendications

1. Élément de réseau optique (1, 2, 3) comprenant :
une entrée optique (10, 110) pour recevoir une pluralité de signaux optiques sur une pluralité de canaux de longueur d'onde,
une sortie optique (11, 111) pour transmettre une pluralité de signaux optiques sur la pluralité de canaux de longueur d'onde,
un élément de distribution (14, 114) agencé pour transférer des signaux optiques à partir de l'entrée optique vers un chemin optique de transit (16, 116) et vers un chemin optique d'extraction (23, 123),
un élément de fusion (15, 115) agencé pour transférer des signaux optiques à partir du chemin optique de transit et à partir d'un chemin d'insertion optique (33, 133) vers la sortie optique,
un module d'extraction (20, 120) comprenant une pluralité de récepteurs optiques (21, 121) pour démoduler des signaux optiques,
un module d'insertion (30, 130) comprenant un dispositif de multiplexage en longueur d'onde (32, 132) connecté au chemin d'insertion optique (33, 133) et une pluralité d'émetteurs optiques (31, 131) connectés au dispositif de multiplexage en longueur d'onde pour générer des signaux optiques sur les canaux de longueur d'onde,
**caractérisé en ce que** l'élément de réseau optique comprend un chemin optique de bouclage interne (40, 140, 70) connectant le module d'insertion au module d'extraction pour transférer des signaux optiques générés par les émetteurs du module d'insertion vers les récepteurs du module d'extraction à des fins de test.

2. Élément de réseau optique selon la revendication 1, comprenant en outre un commutateur optique (35) agencé pour diriger sélectivement le signal optique généré par un des émetteurs vers le chemin d'insertion optique (33) ou le chemin optique de bouclage (40).

3. Élément de réseau optique selon la revendication 1, dans lequel le chemin optique de bouclage (140, 70) est connecté au module d'insertion en aval du dispositif de multiplexage en longueur d'onde (32, 132).

4. Élément de réseau optique selon la revendication 3, dans lequel le module d'insertion comprend un diviseur de puissance optique (141, 65) présentant des sorties respectives connectées au chemin d'insertion optique (33, 133) et au chemin optique de bouclage (140, 70) et une entrée connectée au dispositif de multiplexage en longueur d'onde (32, 132).

5. Élément de réseau optique selon la revendication 3, dans lequel le module d'insertion comprend un démultiplexeur programmable (65) présentant des sorties respectives connectées au chemin d'insertion optique (33, 133) et au chemin optique de bouclage (140, 70) et une entrée connectée au dispositif de multiplexage en longueur d'onde (32, 132).

6. Élément de réseau optique selon la revendication 3 ou 4, comprenant en outre une deuxième sortie optique (111), un deuxième élément de fusion (115) agencé pour transférer des signaux optiques à partir d'un deuxième chemin optique de transit (116) et à partir d'un deuxième chemin d'insertion optique (133) vers la deuxième sortie optique, dans lequel le deuxième chemin d'insertion optique est connecté à une autre sortie du diviseur de puissance optique ou du démultiplexeur programmable (65) du module d'insertion (130).

7. Élément de réseau optique selon l'une des revendications 1 à 6, dans lequel le chemin optique de bouclage (140, 70) comprend en outre un filtre sélectif de longueur d'onde (145, 55) pour transférer ou bloquer sélectivement les signaux optiques vers le module d'extraction en fonction des canaux de longueur d'onde desdits signaux optiques, dans lequel le filtre sélectif de longueur d'onde comprend un bloqueur de longueur d'onde intégré (145).

8. Élément de réseau optique selon l'une des revendications 1 à 7, dans lequel le module d'extraction comprend un dispositif de démultiplexage de longueur d'onde (22, 122) connecté au chemin optique d'extraction (23, 123) et les récepteurs optiques connectés au dispositif de démultiplexage de longueur d'onde, dans lequel le chemin optique de bouclage (40, 140, 70) est connecté au module d'extraction en amont du dispositif de démultiplexage de longueur d'onde (22, 122) pour que les signaux optiques provenant du chemin optique de bouclage soient séparés par le dispositif de démultiplexage de longueur d'onde.

9. Élément de réseau optique selon la revendication 8, comprenant en outre un coupleur optique (42, 142) connecté à une entrée du dispositif de démultiplexage de longueur d'onde (22) et agencé pour fusionner les signaux optiques provenant du chemin optique de bouclage (40, 140) avec les signaux optiques provenant du chemin optique d'extraction (23).

10. Élément de réseau optique selon la revendication 8, dans lequel le module d'extraction (120) comprend un multiplexeur programmable (55) présentant des entrées respectives connectées au chemin optique d'extraction (123) et au chemin optique de bouclage (70) et une sortie connectée au dispositif de démultiplexage de longueur d'onde (122), le multiplexeur programmable (55) étant adapté pour transférer au dispositif de démultiplexage de longueur d'onde une pluralité de signaux optiques à partir des entrées respectives sur une pluralité sélectionnée de canaux de longueur d'onde.

11. Élément de réseau optique selon la revendication 10, comprenant en outre une deuxième entrée optique (110), un deuxième élément de distribution (114) agencé pour transférer des signaux optiques à partir de la deuxième entrée optique vers un deuxième chemin optique de transit (116) et un deuxième chemin optique d'extraction (123), dans lequel le deuxième chemin optique d'extraction est connecté à une autre entrée du multiplexeur programmable (55).

12. Élément de réseau optique selon la revendication 10 ou 11 en combinaison avec la revendication 4 ou 5, dans lequel le chemin optique de bouclage comprend un guide d'onde optique (70) qui s'étend entre la sortie correspondante (71) du diviseur de puissance optique (65) et l'entrée correspondante (72) du multiplexeur programmable (55).

13. Utilisation de l'élément de réseau selon l'une des revendications 1 à 12, comprenant les étapes suivantes :
sélectionner un canal de longueur d'onde disponible pour tester un récepteur optique (21, 121) du module d'extraction et/ou un émetteur optique (31, 131) du module d'insertion,
générer un signal optique sur le canal de longueur d'onde sélectionné avec l'émetteur optique (31, 131) du module d'insertion,
transférer le signal optique sur le canal de longueur d'onde sélectionné à travers le chemin optique de bouclage (40, 140, 70) vers le module d'extraction,
tester le bon fonctionnement de l'émetteur optique et/ou du récepteur optique avec le signal optique sur le canal de longueur d'onde sélectionné.

14. Utilisation selon la revendication 13, dans lequel le test du bon fonctionnement du récepteur optique comprend la démodulation du signal optique avec le récepteur optique.

15. Utilisation selon la revendication 13 ou 14, dans lequel la sélection d'un canal de longueur d'onde disponible consiste à éviter des collisions spectrales entre le signal optique transféré à travers le chemin optique de bouclage et des signaux optiques transférés à travers le chemin d'extraction.
